# EUROPEAN PATENT SPECIFICATION

(11) **EP 0 773 862 B1**
(45) Date of publication and mention of the grant of the patent: **01.12.1999**
(21) Application number: 95924428.6
(22) Date of filing: 31.07.1995
(51) Int. Cl.: B29C 45/14, B29C 51/16, B29C 69/00

(54) **MANUFACTURE OF MOULDED PLASTICS ARTICLES HAVING INCORPORATED BLANKS**
HERSTELLUNG VON SPRITZGEGOSSENEN ARTIKELN MIT INBEGRIFFENER FOLIE
FABRICATION D'ARTICLES EN PLASTIQUE MOULES A ELEMENTS DECOUPES INCORPORES

(30) Priority: 06.08.1994 GB 9415934; 06.08.1994 GB 9415938; 06.08.1994 GB 9415963; 18.03.1995 GB 9505508
(43) Date of publication of application: 21.05.1997
(73) Proprietor: Peerless Plastics Packaging Limited, Tamworth Staffordshire B79 7UL (GB)
(72) Inventor: Bagnall, Paul James Howard, Pipe Ridgeware, Staffordshire WS15 3QL (GB); Hodgson, Neil, Long Buckley, Northamptonshire NN6 7LY (GB); Barnett, Nicholas William, Knighton, Powys LD7 1EY (GB)
(74) Representative: Stonehouse, Sidney William
(86) International application number: GB9501810
(87) International publication number: WO9605040

(56) References cited:
- WO-A-92/00844
- GB-A- 2 191 729
- US-A- 4 710 338

## Description

This invention relates to improvements in the manufacture of moulded plastics articles which have a blank of sheet material, which may for example be a label and/or serve as a diffusion barrier, incorporated in them as they are moulded.

In our British Patent 2 191 729 a method and apparatus are provided whereby a blank of flimsy plastics film material for each moulded plastics article to be produced is cut from a strip of film material by co-operating die and pad components, is collected from a transfer position by a carrier having a flat surface at which suction is applied to pick up and hold the blank flat, and is taken by the carrier to a position between the separated halves of a mould at which the suction is removed and the blank is caused to be urged away from the carrier and located on a surface of the mould cavity at one of the mould halves, for the blank to be incorporated in the next moulding to be formed in the mould.

The method and apparatus are described and illustrated in respect of the moulding of one plastics article at a time incorporating a blank in a mould comprising two relatively movable mould halves.

The present invention is concerned with the moulding of a plurality of plastics articles simultaneously.

According to one aspect of the present invention there is provided a method of manufacturing a plurality of moulded plastics articles each having a blank of sheet material applied to a surface thereof as the articles are moulded in mould cavities of the mould defined by parts of the mould relatively movable between separated and closed positions, including the steps of feeding sheet material to cutting means at which a plurality of the blanks required for a moulding operation is cut to the required shape from the sheet material, supporting the cut blanks discretely, collecting the blanks by transfer means whereby the blanks are carried into positions between separated parts of the mould, arranging that the collected blanks are positioned on the transfer means to correspond to the relative positions of the mould cavities and causing the blanks to be urged away from the transfer means and located on surfaces of the mould cavities, or surfaces to be contained in the mould cavities of the closed mould, at an adjacent part or parts of the mould, subsequently closing the mould parts together and introducing plastics material into the mould cavities, and against the blanks, to produce the moulded plastics articles.

From the cutting step to their location in the mould cavities the blanks are kept separate from one another so that they do not come into contact with one another and cannot cling together. No storing or stacking of the cut blanks is required because they are cut only as they are needed.

By the method now provided blanks cut from the sheet material may initially be at different relative positions from what they are required to have for location in the mould cavities for the moulding operation. They may, for example, be more closely spaced initially than the spacing apart of mould cavities which are to receive them, and the spacing can then be increased to suit the mould cavities as the blanks are collected and/or carried to the mould. The closer spacing of the blanks as they are cut from the sheet material can save appreciably on wastage of the sheet material in the cutting step of the method. For some articles to be moulded it may be more convenient, although there may be more wastage of sheet material, to cut the blanks from the sheet material at more widely spaced relative positions than the spacing of the mould cavities. The form which the blanks assume when located in the mould cavities may allow closer spacing than the blanks need when being cut from the sheet material and supported for collection by the transfer means.

The blanks may be supported after they have been cut and before being collected, by means adapted to adjust the relative positions thereon to suit the mould cavities, The transfer means may have relatively movable parts which adjust the positions of the blanks as they are collected or whilst they are being carried to the mould. Another possibility is to adjust the positions of the blanks to some extent before they are collected, and then complete the positioning by the transfer means.

Setting of the positions of the blanks for the mould cavities may be carried out automatically and may conveniently be controlled by computer.

The transfer means may comprise at least one carrier having a supporting surface on which a plurality of the blanks can be supported at once in spaced positions and be held spread against that surface. Suction or static electricity may be used to pick up the blanks and hold them securely, and flat, against the supporting surface. The carrier may be supported by an arm which moves the carrier between the positions in which it collects the blanks and delivers them to the mould, Adjustment of the relative positions of the blanks from when they are cut from the sheet material to what is required for the mould cavities, may be made by movement of the arm and/or movement of the carrier, or parts of the carrier, relative to the arm.

Cutting the blanks, adjusting their positions for the mould cavities and feeding them to the mould are preferably carried out automatically in association with opening and closing sequences of the mould. The blanks may be cut from the sheet material just before or as the mould begins to open, and the blanks may be re-positioned and transferred to the mould to be located in the mould cavities as the mould begins to close again, so as to minimise delay between moulding operations. As blanks are positioned to be received onto the surfaces of the mould moulded articles produced in the preceding moulding operation may be ejected from the mould. The ejected moulded articles may be collected by the transfer means to be taken to a stack or stacks, where they are stored for subsequent collection, as the transfer means moves back to a position for collecting cut blanks for the next moulding operation.

In another embodiment of the method, the cutting means may cut from the sheet material a group of the blanks in which the number of blanks is a multiple of the number of mould cavities, The blanks are more closely spaced than the mould cavities but so arranged that within the group are sets of the blanks an each of which the spacing apart and configuration of the blanks corresponds to the spacing and configuration of the mould cavities. The transfer means collects one of the sets of blanks at a time from the group for a moulding operation and returns to collect the or, in turn, each other set of blanks from the group for the or each successive moulding operation. The transfer means conveniently returns to collect the or each other set of blanks from the group while the moulding operation using the preceding set of collected blanks is in progress.

This embodiment of the method reduces the number of blank cutting operations required. Also as the cut blanks are presented for collection in the sets, the blanks for each moulding operation can be collected and transferred to the mould without adjustment of the spacing and arrangement of the blanks of the set. Cutting and transfer of the blanks can therefore be done quickly so that, although a plurality of blanks is fed into the mould for each moulding operation, the time available between moulding operations for mouldings to be ejected from the mould from one operation and blanks to be loaded into the mould cavities for the next operation, is kept short.

In the group of blanks as cut adjacent blanks may be closely spaced and may even be separated only by the cut between them. There can thus be an appreciable saving on wastage of the sheet material from which the blanks are cut.

Preferably all the blanks of a group are cut at once from the sheet material. Just one cutting operation may be involved. Preferably the cut blanks are supported in the group in a common flat plane.

The number of blanks in a group cut from the sheet material may be any multiple of the number of mould cavities which can be cut conveniently from the sheet material in a cutting operation, and supported satisfactorily in readiness for transfer to the mould. In one embodiment in which there are four mould cavities sixteen blanks are cut in each group. The spacing and configuration of the sixteen blanks in the group enable tour sets of the blanks to be collected successively for transfer to the mould for four successive moulding operations. Thus only once in every four moulding operations is it necessary for a group of blanks to be cut.

The transfer means may comprise a carrier having a supporting surface on which a collected one of the sets of blanks can be supported, the blanks being held in the same relative positions as they were supported in the group and spread against the supporting surface. Suction or static electricity may be used to pick up the blanks and hold them securely on the supporting surface. The carrier may be supported by an arm which moves the carrier between the positions in which it collects the blanks and delivers them to the mould. Movement of the arm and/or carrier, or parts of the carrier, may be arranged to adjust the carrier for collecting successive sets of the blanks from a group. Alternatively the means by which a group of cut blanks is supported after the cutting operation may be adjustable to move the sets of blanks successively into a position for a set to be collected by the transfer means. The necessary adjustment of the arm and/or carrier, or the support means, for the cut blanks is preferably effected automatically in conjunction with the operation of the mould.

Cutting of the group of blanks is also preferably effected automatically in conjunction with operation of the mould. When the last set of a group of blanks has been collected by the transfer means, the cutting means may be operated to cut the next group of blanks from the sheet material while the transfer means travels to and back from the mould.

In the method now provided the blanks may form labels for the moulded articles, the sheet material being suitably printed for that purpose, and/or, when the moulded articles are containers, they may form diffusion barriers.

The sheet material from which the blanks are cut may be a flimsy plastics film material, which may be in strip form. A strip or strips of the material may be fed to the cutting means from a reel or reels. Surplus material left in the strip or strips after the blanks have been cut from the film material may be wound on to another reel or reels for disposal. The film material may be a co-extruded multi-layer film or it may be a mono-layer film. It may have a thickness of 0.030mm or less.

Preferably the cutting means comprises at least one pad component of larger size than the blanks to be cut at one time from the sheet material, and a die component having dies with cutting edges defining the required shapes of the blanks. Different die components may be provided for different blank shapes. The pad and die components are relatively movable to bear on opposite sides of the sheet material to cause the blanks to be cut out of the material. One or other of the components provides support for the cut blanks and may move the blanks to a transfer position spaced from where the cutting has occurred, ready for collection by the transfer means.

Suction and/or blown air may be applied to the blanks at the mould to locate them on the required surfaces for the moulding operation.

Static electricity may be used to locate the blanks on the surfaces in the mould. Each blank may be electrostatically charged when it is in its respective position for introduction into the mould so that it is attracted to the surface on which it is to be located. The arrangement enables the blanks to be readily located on flat, curved or angled surfaces, and around bends. A suitable device may be provided on the transfer means for electrostatically charging the blanks.

The mould may comprise just two relatively movable mould halves defining the mould cavities. Alternatively the mould may be a stack mould in which an intermediate part of the mould has other mould parts closing with it to define the mould cavities which receive plastics material supplied to the intermediate part.

Dummy cores may be provided for use when certain articles, for example of cylindrical form or tapering circular cross-section, are to be moulded and the blanks may be located on the cores to be positioned in the mould cavities for the moulding operations. The dummy cores hold the blanks for introduction into the mould cavities, the blanks then being transferred from the dummy cores to required surfaces of the mould cavities and the dummy cores withdrawn from the mould cavities before the mould is closed. The cores may be on the aforementioned carrier, or each carrier, of the transfer means, each core having the supporting surface for a blank to be carried.

After a moulding operation the moulded articles are ejected from the mould and may be collected by the transfer means to be taken to a stack or stacks, where they are stored for subsequent collection, as the transfer means moves back to its position for collecting cut blanks for the next moulding operation. Alternatively the moulded articles may be checked for quality before storage. Conveniently, each moulded article is automatically subjected to inspection, after removal from the mould, by scanner means connected to analysis means which relates the inspected article to criteria set for a required standard of moulded article, and causes rejection means to be operated whereby the article is identified as being unsatisfactory if it does not comply with the set criteria.

The rejection means may mark the unsatisfactory article and/or cause it to be ejected from a supply path which satisfactory articles follow to a stack or other collection arrangement.

Preferably the scanner means comprises one or more image analysis cameras (imaging cameras) which provide an electronic image of moulded articles across a grid of light sensitive cells as the articles are inspected. A camera or cameras may take still pictures of each article inspected; stroboscopic light may be used to enable the pictures to be taken while the articles are moving.

Conveniently the analysis means is computerised, for example being a micro-processor. The analysis means may operate in a comparative mode or in an analytical mode where predetermined electronic information is given as the set criteria. Where the scanner means comprises one or more imaging cameras the or each camera may be coupled to the computerised analysis means for the analysis means to respond to images registered by the camera as it views an article presented for inspection.

The criteria for a required standard of moulded article may include thickness, dimensions, accuracy of form, integrity of the articles, contamination and positioning of labels, if applied to the moulded articles in the moulding process. Variations may be made to the criteria for different kinds of articles, or for different qualities of articles.

The analysis means checks each moulded article individually. Preferably the analysis means identifies any unsatisfactory article with the part of the mould in which the article has been moulded. Thus the source of a problem can be readily identified. If a record is kept of the inspection the performance of the mould or any part of, or associated with, it can be readily monitored, which can help to facilitate the taking of corrective action necessary to deal with problems that may arise in the course of manufacture of the moulded articles. Problems that may arise associated with the cutting of blanks for the labels or with the supply of labels to the mould may be identified by the inspection.

There may be variation of the orientation of the moulded articles to the scanning means to enable the articles to be inspected from different aspects, or the scanning means may be arranged to inspect the articles from different aspects. Where, as preferred, imaging cameras are provided for the inspection the cameras may be provided at different positions to view the articles from different angles.

According to a second aspect of the present invention apparatus is provided for manufacturing moulded plastics articles in accordance with the method of the first aspect of the invention herein set forth, comprising an injection mould having mould parts which are relatively movable between separated and closed positions and define a plurality of mould cavities for articles to be moulded therein, means for feeding sheet material to the cutting means, the cutting means being operative to cut sufficient blanks at a time from the sheet material for the number of articles to be produced in one moulding operation of the apparatus, support means for holding the cut blanks discretely and moving them to a transfer position, transfer means adapted to collect the blanks from the transfer position, hold them and take them to the mould for positioning in the mould cavities when the mould parts are separated, the support means and/or transfer means being operable to cause the relative positions of the blanks to be set to correspond to the relative positions of the mould cavities, and means operative to cause the blanks to be released from the transfer means and each to be located on a surface of a respective one of the mould cavities at an adjacent mould part, or at a surface to be presented in a respective one of the mould cavities when the mould is closed.

According to a third aspect of the present invention apparatus is provided for manufacturing a plurality of moulded plastics articles in accordance with the method of the first aspect of the invention herein set forth, comprising an injection mould having mould parts which are relatively movable between separated and closed positions and define a plurality of mould cavities for articles to be moulded therein, cutting means, means for feeding sheet material to cutting means, the cutting means being operative to cut a group of blanks of the required shape, in which group the number of blanks is a multiple of the number of mould cavities of the mould and the blanks are more closely spaced than the mould cavities but so arranged that within the group there are sets of the blanks in each of which the spacing apart and configuration of the blanks corresponds to the spacing and configuration of the mould cavities, support means for holding the group of cut blanks discretely and moving the group to a transfer position, transfer means adapted to collect each set of the blanks in turn from the transfer position for successive moulding operations, hold a collected set and take the set to the mould for positioning the blanks in the mould cavities when the mould parts are separated, and means operative to cause the set of blanks to be released from the transfer means and each blank to be located on a surface of a respective one of the mould cavities, or at a surface to be presented in a respective one of the mould cavities when the mould is closed.

For the moulding of some articles dummy cores may be used which may be provided on the transfer means to hold the blanks for introduction into the mould cavities.

The support means may be a part or parts of the cutting means.

Embodiments of the invention will now be described by way of example only with reference to the accompanying diagrammatic drawings in which:
Figure 1 is a side view of a mould used in each of two methods to be described of manufacturing moulded plastics containers in accordance with the present invention;
Figure 2 is a front view of a female half of the mould;
Figure 3 is a front view of cutting means used in a first of said methods;
Figures 4 and 5 are side and front views respectively of the cutting means and a shuttle plate;
Figures 6a, b and c are front views of the shuttle plate shown in various stages of picking up cut label blanks from the cutting means;
Figures 7a, b, c and d are front views of the shuttle plate and a carrier of a transfer arm shown in various stages of collecting cut labels from the shuttle plate for transfer to the mould in said method;
Figure 8 is a front view of cutting means used in a second of said methods;
Figure 9 is a front view of the cutting means of Figure 8 and a shuttle table;
Figure 10 is a front view of the shuttle table of Figure 9 and a carrier of a transfer arm collecting a set of cut blanks from the shuttle table;
Figure 11 is a front view of the shuttle table and the carrier, showing the carrier moving away from the shuttle table carrying a collected set of blanks, and
Figure 12 shows schematically stages in inspection of moulded articles manufactured by either of the two methods.

The methods and apparatus to be described are applied to the manufacture of rectangular, open-topped, containers from thermoplastics material, for example a low density polyethylene. The containers may be used, for example, for holding ice cream. Each container has a label incorporated into it as it is moulded, the label extending over the external surfaces of the four walls and base of the container. The label is formed by a blank of a flimsy plastics film material which is printed with the required information before the blank is cut from the material.

Instead of a label each container may have a diffusion barrier, similarly formed from a suitable flimsy plastics film material, extending over its external surfaces, or the container may have a combined label and diffusion barrier.

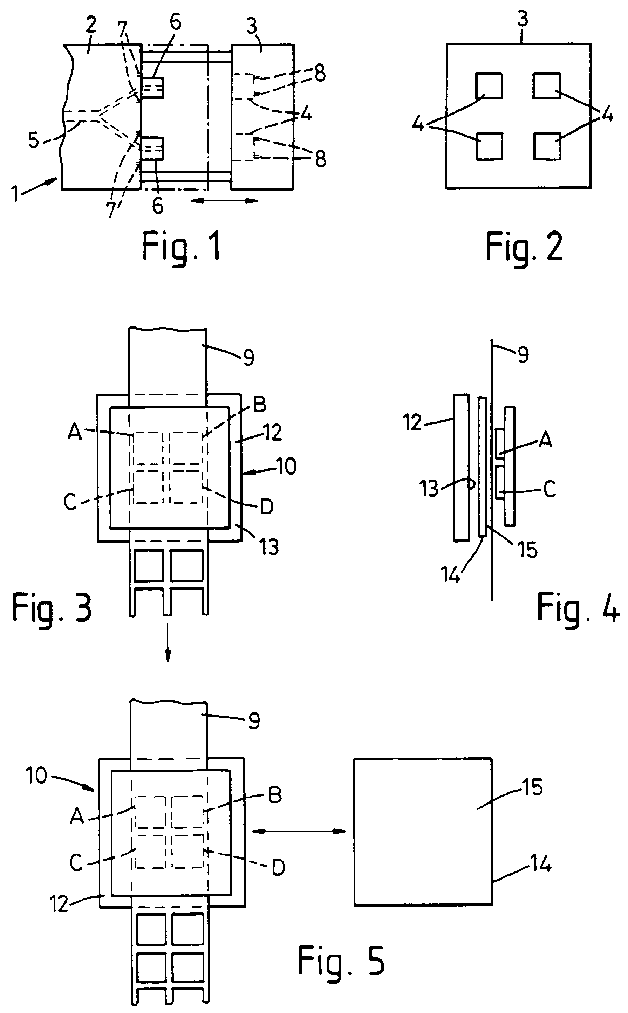

The containers are moulded, four at a time, in an injection moulding machine comprising, Figures 1 and 2, a stationary male mould half 2 and a movable female mould half 3 which together define four spaced mould cavities 4 of the shapes of the containers to be moulded, the four cavities being supplied with liquified plastics material from a common feed 5 in the male mould half 2. The mould cavities 4 are arranged in a square pattern, Figure 2, with the feed 5 centred on the central axis of the square. For each mould cavity 4 the male mould half 2 has a projecting portion 6 which defines the inside surfaces of the container to be formed in the mould. Around that projecting portion 6 are ports 7 at which suction is applied when the mould is open. The female mould half 3 has ports 8 in each mould cavity for air to be blown towards the male mould half when the mould is open in order to urge moulded containers out of the mould cavities.

A first one of the methods of manufacturing the containers, and the apparatus used, will now be further described with reference to Figures 3 to 7 of the drawings. In this method the flimsy plastics film material for the labels is fed as a strip 9 to cutting means 10, Figures 3, 4 and 5. The strip 9 is loaded on a supply reel, not shown, and is wound off that reel to pass to the cutting means 10. Surplus material left after the blanks for the labels have been cut from the strip is wound onto a receiving reel, not shown. The strip 9 is narrower than the length of a side of the notional square containing the mould cavities 4 but is wide enough for two blanks to be cut from it side-by-side with some material of the strip left between and at either side of where the blanks are cut out.

Cutting means 10 comprises a set of four cutting dies A, B, C, D one for each label blank to be cut for supply to each of the four moulding cavities, and a co-operating pressure pad 12. Each cutting die A,B, C, D has a cutting edge of the shape of the blank it is to cut. The cutting dies are opposite one surface of the strip 9. They are arranged in a square pattern in two pairs, A, B and C, D as shown diagrammatically in Figure 3, the dies in each pair being disposed side-by-side laterally of the width of the strip 9 in positions such as to be able to cut out two blanks W, X and Y, Z within the width of the strip, and one pair W, X being spaced from the other pair Y, Z lengthwise of the strip by a distance similar to the spacing apart of the cutting dies, A, B and C, D of each pair. Thus the four cutting dies are all more closely spaced than the blanks W, X, Y, Z they cut from the strip are required to be to be received into the four mould cavities 4. The pressure pad 12 is disposed opposite the other surface of the strip and presents a square flat surface 13 with which the cutting edges of all four cutting dies can engage and which is larger than the notional square containing the four cutting dies. There may be grooves or recesses in the surface 13 of corresponding shapes to the cutting edges of the cutting dies into which the cutting edges enter as blanks are cut from the strip. Suction is arranged to be applied to the surface 13. The cutting dies and pressure pad 12 are relatively movable between an inoperative position at which the dies are spaced from the pad, the strips 9 passing freely between them, Figure 4, and an operative position in which the dies and pad are brought into engagement from opposite sides of the strip to cut four blanks W, X, Y, Z at once from the strip. The strip is fed through the cutting means in steps, a sufficient length of the strip being fed at each step for the four blanks for the mould cavities to be cut in one operation. Suction applied at the surface 13 of the pressure pad holds the cut blanks W, X, Y,Z on that surface as the blanks are cut and when the dies and pressure pad assume the inoperative position. In the inoperative position the pressure pad and the cut blanks are spaced away from the strip. Surplus material left in the strip around where the blanks have been cut from it is wound onto the receiving reel during subsequent steps of feeding the strip to the cutting means.

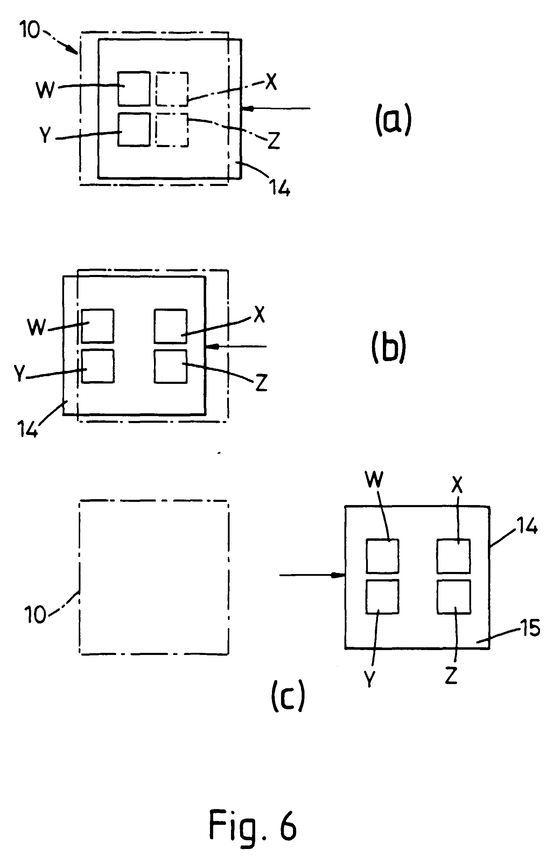

Positioned adjacent to the cutting means 10 is a shuttle table 14, Figure 5, which is linearly movable, reciprocally, transversely relative to the strip to collect the cut blanks W, X, Y, Z from the pressure pad and take them to a transfer position to one side of the strip. The shuttle table 14 has a flat square support surface 15, similar to the surface 13 of the pressure pad, at which suction is also arranged to be applied. To collect the blanks from the pressure pad, the shuttle table moves, as shown in Figure 4, into the space between the strip and the pressure pad, with its support surface parallel to the surface 13 of the pressure pad. It moves into that space in two stages. In the first stage it picks up the two blanks W, Y, Figure 6 (a), which have been cut by the cutting dies A, C of each pair furthest from the transfer position of the shuttle table. The shuttle table then moves further away from the transfer position to the next stage where it picks up the other two blanks X, Z, Figure 6 (b). In this way the blanks picked up in the two stages are spaced apart on the support surface 15 by a distance required for the blanks to be received into the mould cavities at one pair of opposite sides of the notional square pattern of the mould cavities. Having picked up the four blanks the shuttle table returns to the transfer position, Figure 6(c).

Application and removal of suction at the support surface 15 of the shuttle table and the surface 13 of the pressure pad is synchronised to ensure that the blanks W, X, Y, Z are fully controlled in their movement from one surface to the other.

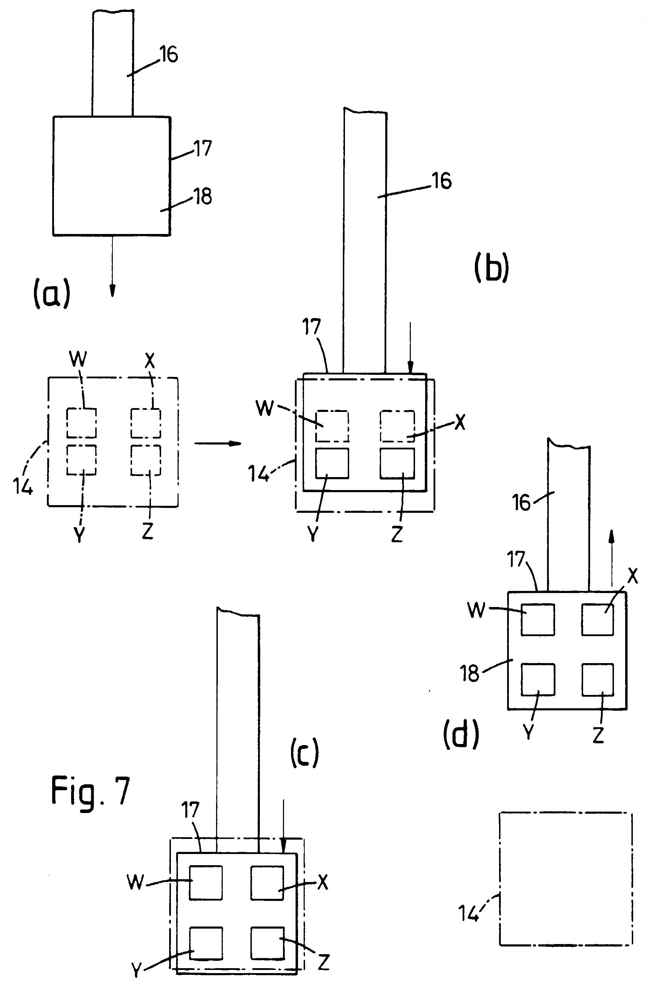

Reciprocally movable relative to the shuttle table 14, transversely of the line of reciprocal movement of the shuttle table, is a transfer arm 16, Figure 7, having a carrier 17 which has a flat supporting surface 18 able to receive all four blanks W, X, Y, Z from the shuttle table at relative positions required for the blanks to be received into the mould cavities. The transfer arm 16 moves the carrier 17 between the transfer position of the shuttle table and the mould. When the carrier is at the transfer position it has a step movement from the transfer arm so that it initially stops short of the full extent of its movement away from the mould and then moves on to stop again at the limit of its movement away from the mould. The distance between the initial stop and the second stop corresponds to the distance between centres of the mould cavities at opposite sides of the square pattern of the cavities. Suction is arranged to be applied at the supporting surface 18 of the carrier 17. The carrier moves to the transfer position when the shuttle table is at that position. At its initial stop at the transfer position, Figure 7(b), the carrier collects from the shuttle table, by suction, the two blanks Y, Z furthest from the mould, and at the second stop, Figure 7(c), the carrier collects, again by suction, the other two blanks W, X. As suction is applied by the carrier to collect the respective pairs of the blanks, the suction exerted on those blanks by the shuttle table is released. The distance between the two stops of the carrier is such that when all four blanks W, X, Y, Z have been collected by the carrier they are in a square pattern, Figure 7(d), correctly spaced apart to be received into the mould cavities.

The carrier 17 is moved by the transfer arm 16 from the transfer position, Figure 7(d), to the mould as the mould is opening, and it is positioned between the separated male and female mould halves 2, 3 so that the four collected blanks W, X, Y, Z are respectively directly opposite the projecting portions 6 of the male mould half to be drawn onto those portions by suction at the ports 7 when suction is released at the carrier.

In addition to the carrier 17, the transfer arm 16 also carries pick-up heads, not shown, which operate to receive completed containers ejected from the mould cavities of the female mould half by air blown from the ports 8 in the cavities after moulding operations, whilst the blanks are being located on the projecting portions 6 of the male mould half. The pick-up heads apply suction to the containers to hold them on the transfer arm, which delivers them to a stack as it subsequently returns the carrier to the transfer position.

Feeding of the strip to the cutting means, operation of the cutting means, the movements of the shuttle table and transfer arm and the application and removal of suction to and from the cut blanks, including the blowing of air from the ports of the mould cavities to eject the moulded containers, are all automatically controlled and coordinated with operation of the mould, as by a microprocessor. Preferably there is provision at the supporting surfaces 15, 18 of the shuttle table 14 and carrier 17 to enable fine adjustment to be made of the positions of the blanks on those surfaces. That is also preferably automatically controlled.

It will be understood from the foregoing that, in an operating cycle, whilst containers are being moulded in the mould the blanks for the next containers to be moulded are being cut, at closely spaced relative positions, from the strip by the cutting means. The cut blanks are picked up by the shuttle table and there is some initial re-positioning of the blanks relative to one another on the shuttle table towards setting them in the more widely spaced positions required for the mould cavities. From the shuttle table the blanks are collected by the carrier of the transfer arm which completes the re-positioning of the blanks necessary for them to be able to be received into the mould cavities. The collection takes place as the mould begins to open and the blanks are taken to the opening mould, where they are located on the male mould half while the containers from the moulding operation just completed are ejected and held by the pick-up heads on the transfer arm. As the mould is closing for the next moulding operation, and the blanks are received into the mould cavities, the transfer arm is returning the carrier to the transfer position of the shuttle table ready to receive the next batch of blanks, depositing the containers received from the mould at the stack on the way.

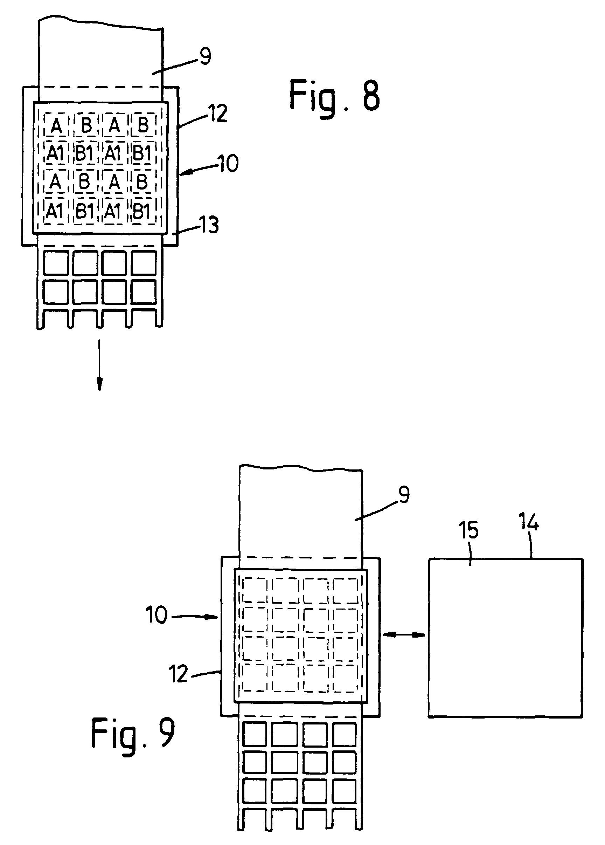

The second method of manufacturing the containers, and the apparatus used, will now be further described with reference to Figures 8 to 11 of the accompanying drawings. Parts comparable to those in the first method just described will be identified by the same references, where appropriate. In this method the flimsy plastics film material for the labels is again fed as a strip 9 to cutting means 10, Figures 8 and 9, the strip 9, as before, being loaded on a supply reel, wound off that reel to pass to the cutting means 10, and the remains of the strip left after the blanks have been cut being wound onto a receiving reel. The strip 9 is wider than the length of a side of the notional square containing the mould cavities 4 of the mould. The width is enough for four equally spaced blanks to be cut from it side-by-side with some material of the strip left between and at either side of where the blanks are cut out. Spacing between adjacent blanks to be cut is such that their centres are separated by half the distance between the centres of the mould cavities at a side of the notional square.

Cutting means 10 comprises a set of sixteen cutting dies A, B, A1, B1, enabling a group of sixteen label blanks to be cut in one operation, and a co-operating pressure pad 12. The cutting dies are in a fixed relationship to one another. Each cutting die A, B, A1, B1, has a cutting edge of the shape of the blank it is to cut. The dies are arranged in a square pattern in four rows of four, as shown diagrammatically in Figure 8. The dies in each row are equally spaced apart and the rows are equally spaced apart by the same distance as the dies in each row, the centres of adjacent dies, in both directions of the sides of the square, being spaced apart by a distance equal to half the distance between the centres of the mould cavities at a side of the notional square containing the cavities. Within the square pattern of the dies there are thus four sets of dies A, B, A1, B1 in each of which there are four dies disposed in a notional square pattern of corresponding size to the square pattern of the mould cavities, The pressure pad 12 is disposed opposite to the other surface of the strip and presents a square flat surface 13 which is larger than the square pattern of the sixteen cutting dies and with which the cutting edges of all of the cutting dies can engage. There may be grooves or recesses in the surface 13 of corresponding shapes to the cutting edges of the cutting dies for the cutting edges to enter into as blanks are cut from the strip. Suction is arranged to be applied to the surface 13. The set of cutting dies and the pressure pad 12 are relatively movable between an inoperative position at which the dies are spaced from the pad, the strip 9 passing freely between them, and an operative position in which the dies and pad are brought into engagement from opposite sides of the strip to cut sixteen blanks Y, Z, Y1, Z1 at once from the strip. The strip is fed through the cutting means in steps, a sufficient length of the strip being fed at each step for the sixteen blanks be cut in one operation. Suction applied at the surface 13 of the pressure pad holds the cut blanks Y, Z, Y1, Z1 on that surface as the blanks are cut and when the dies and pressure pad assume the inoperative position. In the inoperative position the pressure pad and the cut blanks are spaced away from the strip.

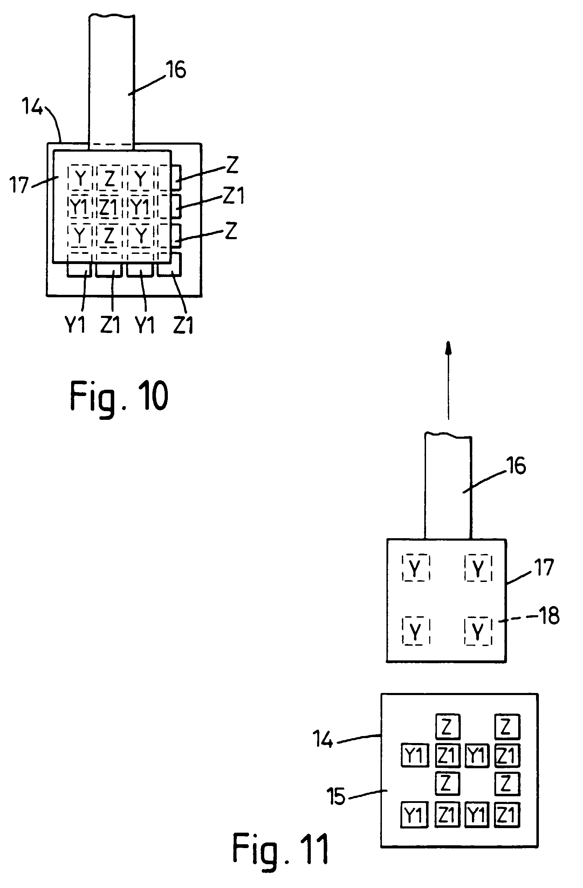

Positioned adjacent to the cutting means 10 is a shuttle table 14, Figure 9, which is linearly movable, reciprocally, transversely relative to the strip to collect the cut blanks from the pressure pad 12 and take them to a transfer position to one side of the strip. The shuttle 14 has a flat square support surface 15, similar to the surface 13 of the pressure pad, at which suction is also arranged to be applied. To collect the blanks from the pressure pad, the shuttle table moves into the space between the strip and the pressure pad with its support surface parallel to the surface 13 of the pressure pad. Suction is applied to the shuttle table and removed from the pressure pad so that the cut blanks are drawn from the pressure pad on to the shuttle table where they are held in the same square pattern by the suction. Having picked up the blanks the shuttle table returns to the transfer position, Figure 10.

Application and removal of suction at the support surface 15 of the shuttle table and the surface 13 of the pressure pad is synchronised to ensure that the blanks are all fully controlled in their movement from one surface to another.

Reciprocally movable relative to the shuttle table 14 is a transfer arm 16, Figure 10, having a carrier 17 which has a flat supporting surface 18 able to receive a set of four blanks from the shuttle table in the notional square pattern corresponding to the pattern of the mould cavities, The transfer arm 16 moves the carrier 17 between the transfer position of the shuttle table and the mould. At the transfer position the carrier is arranged to take up, in turn, four different positions corresponding to the positions of the sets of four blanks cut by the four sets of cutting dies A, B, A1, B1. The carrier takes up a different one of these four positions in successive visits to the transfer position so that over four visits to the transfer position the carrier progressively picks up all sixteen of the blanks from the shuttle table.

Suction is arranged to be applied at the supporting surface 18 of the carrier 17 to pick up a respective set of four blanks. The shuttle table remains in the transfer position until the carrier has made four visits to the transfer position and collected all sixteen blanks. As suction is applied by the carrier to collect the respective sets of the blanks, the suction exerted on those blanks by the shuttle table is released.

When all the blanks have been collected the shuttle table returns to the cutting means to collect the next set of sixteen blanks from the pressure pad 12.

As in the first method described, the carrier 17 is moved by the transfer arm 16 from the transfer position to the mould as the mould is opening, and it is positioned between the separated male and female mould halves 2, 3 so that the four blanks in a collected set are respectively directly opposite the projecting portions 6 of the male mould half to be drawn onto those portions by suction at the ports 7 when suction is released at the carrier.

As before, the transfer arm 16 also carries pick-up heads, not shown, which operate to receive completed containers ejected from the mould cavities of the female mould half after moulding operations, whilst the blanks are being located on the projecting portions 6 of the male mould half.

Feeding of the strip to the cutting means, cutting the blanks from the strip, collecting the blanks and taking them to the mould, are all automatically controlled and coordinated with operation of the mould.

Collection of a set of blanks takes place as the mould begins to open. The collected set of blanks is located on the male mould half while containers from a preceding moulding operation are ejected.

Once during every four moulding operations a further group of sixteen blanks is cut from the strip by the cutting means, and during the fourth moulding operation of a series the shuttle plate returns to the cutting means to pick up the next group of sixteen blanks from the pressure pad and take them to the transfer position. This is done without varying the timing between moulding operations.

Instead of the containers being manufactured in a mould having two relatively movable mould halves, as described, they may be manufactured in a stack mould. The stack mould may, for example, have a fixed end mould part, a centre mould part and movable end mould part, the centre mould part and movable end mould part being movable relative to the fixed end mould part, and the movable end mould part being movable relative to the centre mould part. The fixed and movable end mould parts are spaced from opposite sides of the centre mould part when the mould is open, and the centre mould part is sandwiched between the end mould parts when the mould is closed. Liquified plastics material is supplied to the centre mould part and distributed to mould cavities in the two end mould parts. As in the embodiments already described, there may be four mould cavities for the simultaneous moulding of four containers in each moulding operation of the machine. For different articles, or sizes of articles, the mould may possibly be arranged for fewer or even more articles to be moulded in each moulding operation.

In this case, there may be two strips of the plastics film material from which the blanks for the labels are cut. The cutting means conveniently comprises two sets (one set to each strip) of cutting dies and flat pressure pads, one set for blanks to be supplied to the mould cavities of the fixed end mould part and the other set for blanks to be supplied to the mould cavities of the movable end part. The two sets of dies and pressure pads are synchronised for simultaneous operation. The cut blanks are securely held, as before, and moved to a transfer position spaced from the strips.

Conveniently, the transfer position of the one set of the cutting means is opposite the space between the fixed end mould part and centre mould part when the stack mould is open, and the transfer position of the other set of the cutting means is opposite where the space between the movable end mould part and the centre mould part will be. A transfer arm, angularly movable between the cutting means and the mould has two parallel carriers, one associated with each set of the cutting means, to receive and hold the blanks cut by the associated cutting means. The carriers take the blanks, as the transfer arm is moved angularly, to the mould and into the aforesaid spaces between the separated mould parts to be received into the respective mould cavities.

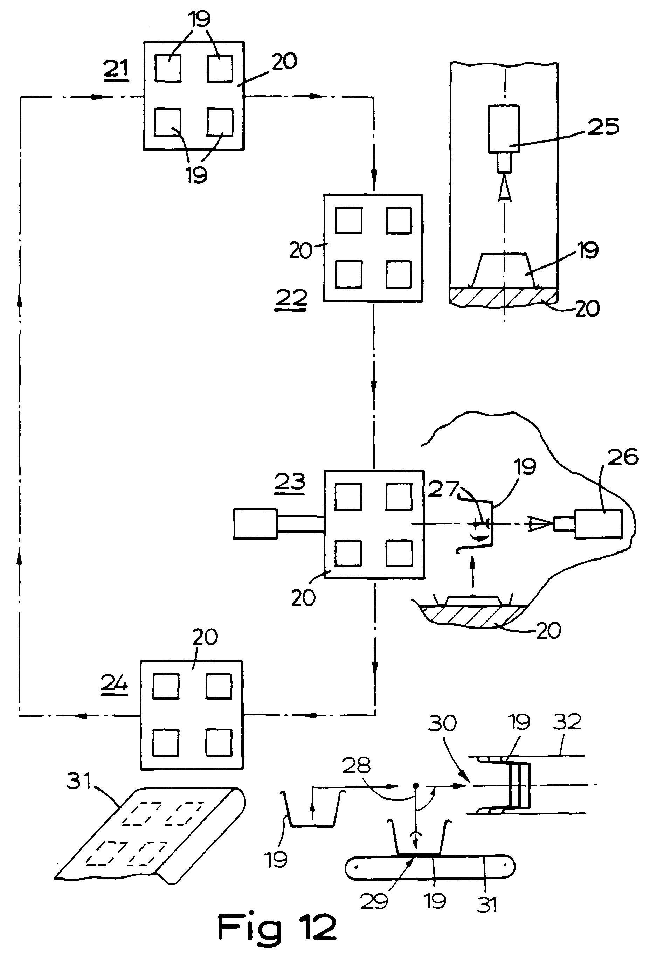

Containers made by the methods described may be inspected for quality after they leave the mould. This may be done automatically, as will now be described with reference to Figure 12 of the drawings.

Moulded containers 19 received by the pick-up heads of the transfer arm 16 from the mould in either method are deposited on a pallet 20 as the transfer arm returns to the transfer position.

The pallet 20 travels from a load station 21 along a rectangular path, on a conveyor track, successively passing through a first scanning station 22, a second scanning station 23 and an off-load station 24 before returning to the load station. At each scanning station 22,23 there is a set of imaging cameras 25,26. All of the cameras 7,8 are connected to a micro-processor, not shown, forming analysis means, programmed to relate each inspected container to criteria set for the required standard of a satisfactory container in terms of dimensions, accuracy of form, thickness, integrity, contamination and correct positioning of the label. There is a camera 25,26 for each container to be inspected at each of the scanning stations 22,23. Since four containers 19 are moulded in each operation of the mould, and thus to be inspected for quality, there are four cameras 25,26 at each of the scanning stations positioned to be directed centrally of each container to be inspected. There may possibly be just two cameras at each scanning station, each camera being arranged to scan two containers at a time at the station.

Cameras at the second scanning station 23 are directed in a direction at 90° to the direction of the cameras at the first scanning station 21. At the first scanning station 22 the cameras 25 view the containers 19 as they are presented on the pallet 20, so inspecting one aspect of the containers. At the second scanning station pick-up heads 27 remove the containers from the pallet, turn them through 90° to present them to the cameras 26 for the opposite aspect of the containers to be inspected, and then return them to the pallet.

There are further pick-up heads 28 at the off-load station 24 which finally remove the containers 19 from the pallet, move transversely to a reject position 29 and then through 90° to a stacking position 30. If any containers inspected do not meet the criteria set in the micro-processor the micro-processor causes the relevant pick-up heads 28 at the off-load station to eject those lids at the reject position 29. The satisfactory containers are held by the relevant pick-up heads 28 until the stacking position 30 is reached. A conveyor 31 at the reject position 29 takes the ejected containers to a collection point for disposal. There is a stack 32 at the stacking position 30 to receive the satisfactory containers. Conveniently there is a separate stack for containers of each mould cavity.

Suction is applied to the pick-up heads 27 at the second scanning station to hold the containers while they are presented to the cameras of that station. Similarly suction is applied at the pick-up heads 28 at the off-load station to remove the containers from the pallet and hold them until they are either ejected at the reject position 29 or delivered to the stack 32. The suction is controlled by the micro-processor.

Containers deposited on the pallet by the carrier are retained in the same relative positions as they were in the mould cavities of the mould, and they are retained in these positions until they have reached the off-load position. The micro-processor is therefore able to identify the containers with the mould cavities in which they were formed. In that way also it can identify the cutting means by which the blanks are cut for the respective mould cavities. Accordingly, if an inspected container is unsatisfactory it can be traced back readily to the mould cavity in which it was formed, and the cutting means that provided the blank for the label of the container can be identified as well. Corrective action can be concentrated on the respective mould cavity and/or the respective cutting means, as required.

The inspection of the containers made in each moulding operation takes place while the carrier collects the blanks for another moulding operation and returns to the mould for those blanks to be located in the mould cavities. In that time the pallet will have returned to the load station 21 to collect the containers that have just been moulded.

All operations of the conveyor, cameras and pick-up heads at the second scanning station and the off-load station are automatically controlled and synchronised together with the operations of the transfer arm, blank cutting means and mould.

The criteria set in the micro-processor for the inspection may be varied to suit different moulded articles.

## Claims

1. A method of manufacturing a plurality of moulded plastics articles each having a blank (W,X,Y,Z; Y,Z,Y1,Z1) of sheet material applied to a surface thereof as the articles are moulded in mould cavities (4) of the mould defined by parts (2,3) of the mould relatively movable between separated and closed positions, characterised in that it includes the steps of feeding sheet material (9) to cutting means (10) at which a plurality of blanks (W,X,Y,Z; Y,Z,Y1,Z1) required for a moulding operation is cut to the required shape from the sheet material, supporting the cut blanks discretely, collecting the blanks by transfer means (14,16,17) whereby the blanks are carried into positions between separated parts (2,3) of the mould, arranging that the collected blanks are positioned on the transfer means (14,16,27) to correspond to the relative positions of the mould cavities (4) and causing the blanks to be urged away from the transfer means and located on surfaces of the mould cavities, or surfaces to be contained in the mould cavities of the closed mould, at an adjacent part or parts of the mould, subsequently closing the mould parts together and introducing plastics material into the mould cavities, and against the blanks, to produce the moulded plastics articles.

2. A method according to claim 1 characterised in that the cutting means (10) cuts in a cutting operation a corresponding number of blanks (W,X,Y,Z) to the mould cavities (4) in the mould.

3. A method according to claim 2 characterised in that the blanks (W,X,Y,Z) as cut from the sheet material are at differently spaced relative positions from the relative positions of the mould cavities.

4. A method according to claim 3 characterised in that the blanks (W,X,Y,Z) are supported after being cut, and before being collected, by means adapted to adjust the relative positions of the blanks thereon to suit the relative positions of the mould cavities.

5. A method according to claim 3 characterised in that the transfer means has relatively movable parts (14,15,17) which adjust the positions of the blanks (W,X,Y,Z) as they are collected to suit the relative positions of the mould cavities.

6. A method according to claim 3 characterised in that the transfer means has relatively movable parts which adjust the positions of the blanks (W,X,Y,Z) to suit the relative positions of the mould cavities as they are carried by the transfer means to the mould.

7. A method according to claim 3 characterised in that the positions of the blanks (W,X,Y,Z) are partially adjusted before the blanks are collected, and the positioning of the blanks to suit the relative positions of the mould cavities is completed by the transfer means.

8. A method according to any of claims 3 to 7 characterised in that re-positioning of the blanks to suit the relative positions of the mould cavities is automatically carried out under the control of a computer.

9. A method according to claim 1 characterised in that the cutting means (10) cuts a group of the blanks (Y,Z,Y1,Z1) in which the number of blanks is a multiple of the number of mould cavities (4) and the blanks are more closely spaced than the mould cavities but so arranged that within the group are sets of the blanks in each of which the spacing apart and configuration of the blanks corresponds to the spacing and configuration of the mould cavities, and the transfer means (14,16,17) collects one of the sets of blanks from the group for a moulding operation and returns to collect the or, in turn, each other set of blanks from the group for the or each successive moulding operation.

10. A method according to claim 9 characterised in that the group of blanks (Y,Z,Y1,Z1) is cut in one operation of the cutting means (10).

11. A method according to claim 9 or claim 10 characterised in that there are four mould cavities (4) and there are sixteen blanks (Y,Z,Y1,Z1) in the group cut by the cutting means (10) arranged so that there are four sets of the blanks to be taken successively to the mould for four successive moulding operations.

12. A method according to any preceding claim characterised in that the sheet material from which the blanks are cut is a flimsy plastics film material having a thickness of 0.030mm or less.

13. A method according to any preceding claim characterised in that the cutting means (10) comprises at least one pad component (12) of larger size than the blank or blanks to be cut at one time from the sheet material, and a die component (A,B,C,D; A,B,A1,B1) for each blank (W,X,Y,Z; Y,Z,Y1,Z1) having a cutting edge defining the required shape of the blank, the pad and die components being relatively movable to bear on opposite sides of the sheet material (9) to cause the blanks to be cut out of the material, and each cut blank being supported by one of the components for collection by the transfer means.

14. A method according to claim 13 characterised in that the pad component (12) has a surface adjacent to the sheet material in which are grooves or recesses with which the cutting edges co-operate.

15. A method according to claim 13 or claim 14 characterised in that the component by which a cut blank is supported moves the blank to a transfer position spaced from where the cutting occurs, at which transfer position the blank is collected by the transfer means (16,17).

16. A method according to any preceding claim characterised in that the transfer means (16,17) comprises at least one carrier (17) having a supporting surface (18) on which the collected blanks are supported, held spread against the supporting surface (18).

17. A method according to claim 16 characterised in that the carrier (17) is supported by an arm (16) which moves the carrier between positions in which it collects the blanks and delivers them to the mould, and the arm (16) is movable to cause the relative positions of the cut blanks to be adjusted, as the blanks are collected, such that the blanks are supported on the carrier in positions to suit the relative positions of the mould cavities (4).

18. A method according to claim 16 as dependent from claim 3 characterised in that the carrier (17) is supported by an arm (16) which moves the carrier between positions in which it collects the blanks and delivers them to the mould, and the carrier is movable relative to the arm to cause the relative positions of the cut blanks to be adjusted as the blanks are collected, such that the blanks are supported on the carrier in positions to suit the relative positions of the mould cavities (4).

19. A method according to claim 16 or claim 17 as dependent from claim 5 or claim 6 characterised in that the carrier (17) has the relatively movable parts which adjust the positions of the blanks.

20. A method according to any of claims 9 to 11 characterised in that the transfer means (16,17) comprises a carrier (17) having a supporting surface (18) on which a collected set of the blanks is supported, the blanks of the set being held in the same relative positions as they were supported in the group and spread against the supporting surface (18).

21. A method according to claim 20 characterised in that the carrier (17) is supported by an arm (16) which moves the carrier between the positions in which it collects the blanks and delivers them to the mould, and movement of the arm adjusts the carrier for collecting successive sets of the blanks from a group.

22. A method according to claim 20 characterised in that the carrier (17) is supported by an arm (16) which moves the carrier between the positions in which it collects the blanks and delivers them to the mould, and movement of the carrier relative to the arm adjusts the carrier for collecting successive sets of the blanks from a group.

23. A method according to claim 20 characterised in that the carrier (17) has parts which are movable for collecting successive sets of the blanks from a group.

24. A method according to claim 9 characterised in that the group of cut blanks (Y,Z,Y1,Z1) is supported after cutting, and before collection, by means adjustable to move the sets of blanks in the groups successively into a position for each set in turn to be collected by the transfer means.

25. A method according to any preceding claim characterised in that the mould is a stack mould which has an intermediate part with which other mould parts close to define the mould cavities, plastics material being supplied to the intermediate part to be received into the mould cavities.

26. A method according to any preceding claim characterised in that dummy cores are provided to be received into the mould cavities (4) and the blanks are located on the dummy cores to be received into the mould cavities.

27. A method according to any preceding claim characterised in that after a moulding operation each of the moulded articles (10) produced is automatically subjected, after removal from the mould, to inspection by scanner means (25,26) connected to analysis means which relates the inspected article to criteria set for a required standard of moulded article, and causes rejection means to be operated whereby the inspected article is identified as being unsatisfactory if it does not comply with the set criteria.

28. A method according to claim 27 characterised in that the rejection means identifies the unsatisfactory article with the respective mould cavity in which it had been produced.

29. A method according to claim 27 or 28 characterised in that the scanner means comprises one or more image analysis cameras (25,26).

30. A method according to any of claims 27 to 29 characterised in that the transfer means (16,17) collects the moulded articles from the mould after each moulding operation and presents them to the scanner means (25,26) for inspection.

31. Apparatus for manufacturing moulded plastics articles in accordance with the method as claimed in any of claims 1 to 8, or in any of claims 12 to 19 or 25 to 30 as dependent from any of claims 1 to 8, comprising an injection mould having mould parts (2,3) which are relatively movable between separated and closed positions and define a plurality of mould cavities (4) for articles to be moulded therein, cutting means (10), means for feeding sheet material to the cutting means, and characterised in that the cutting means (10) is operative to cut sufficient blanks (W,X,Y,Z; Y,Z,Y1,Z1) at a time from the sheet material for the number of articles to be produced in one moulding operation of the apparatus, support means (14) is provided for holding the cut blanks discretely and moving them to a transfer position, transfer means (16,17) is adapted to collect the blanks from the transfer position , hold them and take them to the mould for positioning in the mould cavities (4) when the mould parts are separated, the support means (14) and/or transfer means (16,17) being operable to cause the relative positions of the blanks to be set to correspond to the relative positions of the mould cavities, and means is operative to cause the blanks to be released from the transfer means and each to be located on a surface of a respective one of the mould cavities at an adjacent mould part, or at a surface to be presented in a respective one of the mould cavities when the mould is closed.

32. Apparatus for manufacturing moulded plastics articles in accordance with the method as claimed in any of claims 1,9,10, 11 or 20 to 24, or in any of claims 12 to 16 or 25 to 30 as dependent from any of claims 1, 9,10,11 or 20 to 24, comprising an injection mould having mould parts (2,3) which are relatively movable between separated and closed positions and define a plurality of mould cavities (4) for articles to be moulded therein, cutting means (10), means for feeding sheet material to the cutting means, and characterised in that the cutting means (10) is operative to cut a group of blanks (Y,Z,Y1,Z1) of the required shape in which group the number of blanks is a multiple of the number of mould cavities (4) of the mould and the blanks are more closely spaced than the mould cavities but so arranged that within the group there are sets of the blanks in each of which the spacing apart and configuration of the blanks corresponds to the spacing and configuration of the mould cavities, support means (14) is provided for holding the group of cut blanks discretely and moving the group to a transfer position, transfer means (16,17) is adapted to collect each set of the blanks in turn from the transfer position for successive moulding operations, hold a collected set and take the set to the mould for positioning the blanks in the mould cavities when the mould parts are separated, and means is operative to cause the set of blanks to be released from the transfer means and each blank to be located on a surface of a respective one of the mould cavities, or at a surface to be presented in a respective one of the mould cavities when the mould is closed.

33. Apparatus according to claim 31 or claim 32 characterised in that dummy cores are provided on the transfer means (16,17) on which the blanks are held for introduction into the mould cavities.

34. Apparatus according to claim 31 or claim 32 characterised in that the supporting means is a part or parts of the cutting means.

## Patentansprüche

1. Verfahren zum Herstellen mehrerer Spritzgußartikel, bei denen jeweils ein Blatt (W, X, Y, Z; Y, Z, Y1, Z1) Flachmaterial auf eine Fläche aufgebracht wird, wenn die Artikel in Formhohlräumen (4) der Form geformt werden, weiche definiert werden durch Teile (2, 3) der Form, die relativ zwischen einer getrennten und einer geschlossenen Stellung bewegbar sind, **dadurch gekennzeichnet**, daß es folgende Schritte enthält: Zuführen von Flachmaterial (9) zu einer Schneidvorrichtung (10), an der mehrere Blätter (W, X, Y, Z; Y, Z, Y1 Z1), die für einen Formvorgang erforderlich sind, aus dem Flachmaterial in die gewünschte Form zugeschnitten werden, diskretes Haltern der geschnittenen Blätter, Sammeln der Blätter durch eine Transfereinrichtung (14, 16, 17), wodurch die Blätter in Positionen zwischen getrennten Formteilen (2, 3) getragen werden, Vorsehen, daß die gesammelten Blätter auf der Transfereinrichtung (14, 16, 27) derart positioniert sind, daß sie den relativen Positionen der Formhohlräume (4) entsprechen, und Veranlassen, daß die Blätter von der Transfereinrichtung loskommen und auf Flächen der Formhohlräume zu liegen kommen, oder auf Flachen, die in den Formhohlräumen bei geschlossener Form an einem benachbarten Teil oder Teilen der Form enthalten sind, nachfolgendes Schließen der Formteile und Einführen von Kunststoff in die Formhohlräume gegen die Blätter, um die Spritzgußartikel herzustellen.

2. Verfahren nach Anspruch 1, **dadurch gekennzeichnet**, daß die Schneidvorrichtung (10) bei einem Schneidvorgang eine Anzahl von Blättern (W, X, Y, Z) schneidet, die der Anzahl der Formhohlräume (4) in der Form entspricht.

3. Verfahren nach Anspruch 2, **dadurch gekennzeichnet**, daß die Blätter (W, X, Y, Z) beim Schneiden aus dem Flachmaterial sich an anderen beabstandeten Relativ-Positionen befinden als die Relativ-Positionen der Formhohlräume.

4. Verfahren nach Anspruch 3, **dadurch gekennzeichnet**, daß die Blätter (W, X, Y, Z) nach dem Schneiden und vor dem Sammeln durch eine Einrichtung getragen werden, die dazu ausgebildet ist, die Relativ-Positionen der Blätter auf ihr so einzustellen, daß sie den Relativ-Positionen der Formhohlräume entsprechen.

5. Verfahren nach Anspruch 3, **dadurch gekennzeichnet**, daß die Transfereinrichtung relativ-bewegliche Teile (14, 15, 17) aufweist, die die Positionen der Blätter (W, X, Y, Z) bei dem Sammeln so einstellen, daß sie den Relativ-Positionen der Formhohlräume entsprechen.

6. Verfahren nach Anspruch 3, **dadurch gekennzeichnet**, daß die Transfereinrichtung relativ-bewegliche Teile aufweist, die die Positionen der Blätter (W, X, Y, Z) so einstellen, daß sie den Relativ-Positionen der Formhohlräume entsprechen, während sie von der Transfereinrichtung zu der Form befördert werden.

7. Verfahren nach Anspruch 3, **dadurch gekennzeichnet**, daß die Positionen der Blätter (W, X, Y, Z) teilweise vor dem Sammeln der Blätter eingestellt werden, und daß das Positionieren der Blätter zur Anpassung an die Relativ-Positionen der Formhohlräume von der Transfereinrichtung abgeschlossen wird.

8. Verfahren nach einem der Ansprüche 3 bis 7, **dadurch gekennzeichnet**, daß die Neupositionierung der Blätter zur Anpassung an die Relativ-Positionen der Formhohlräume automatisch unter der Steuerung eines Rechners durchgeführt wird.

9. Verfahren nach Anspruch 1, **dadurch gekennzeichnet**, daß die Schneidvorrichtung (10) eine Gruppe von Blättern (Y, Z, Y1, Z1) schneidet, innerhalb der die Anzahl der Blätter ein Vielfaches der Anzahl von Formhohlräumen (4) ist, wobei die Blätter enger beabstandet sind als die Formhohlräume, jedoch so angeordnet sind, daß innerhalb der Gruppe Plätze von Blättern vorhanden sind, in denen jeweils der Zwischenabstand und die Konfiguration der Blätter dem Zwischenabstand und der Konfiguration der Formhohlräume entspricht, und die Transfereinrichtung (14, 16, 17) einen der Sätze von Blättern aus der Gruppe für einen Formvorgang sammelt, um Zurückzukehren um den weiteren oder jeden weiteren Satz von Blättern aus der Gruppe für den oder jeden nachfolgenden Formvorgang zu sammeln.

10. Verfahren nach Anspruch 9, **dadurch gekennzeichnet**, daß die Gruppe von Blättern (Y, Z, Y1, Z1) in einem Arbeitsvorgang der Schneidvorgang (10) geschnitten wird.

11. Verfahren nach Anspruch 9 oder Anspruch 10, **dadurch gekennzeichnet**, daß es vier Formhohlräume (4) gibt, und daß es sechzehn Blätter (Y, Z, Y1, Z1) in der von der Schneidvorrichtung (10) geschnittenen Gruppe gibt, die derart angeordnet sind, daß es jeweils vier Sätze von Blättern gibt, die sukzessive zu der Form für vier aufeinanderfolgende Formvorgänge gebracht werden.

12. Verfahren nach einem vorhergehenden Anspruch, **dadurch gekennzeichnet**, daß das Flachmaterial, aus dem die Blätter geschnitten werden, ein hauchdünnes Kunststoff-Folienmaterial mit einer Dicke von 0,30 mm oder weniger ist.

13. Verfahren nach einem vorhergehenden Anspruch, **dadurch gekennzeichnet**, daß die Schneidvorrichtung (10) mindestens ein Widerlagerteil (12) aufweist, das eine größere Bemessung aufweist als das Blatt oder die Blätter, die mit einem Mal aus dem Flachmaterial zu schneiden sind, und ein Stanzteil (A, B, C, D; A, B, A1, B1) für jedes Blatt (W, X, Y, Z; Y, Z, Y1, Z1) mit einer Schneidkante aufweist, weiche die erforderliche Form des Blatts definiert, wobei Widerlager- und Stanzteil relativ zueinander bewegbar sind, um an einander abgewandten Seiten des Flachmaterials (9) anzuliegen und zu veranlassen, daß die Blätter aus dem Material ausgeschnitten werden, wobei jedes geschnittene Blatt durch eines der Teile für das Sammeln durch die Transfereinrichtung aufgenommen wird.

14. Verfahren nach Anspruch 13, **dadurch gekennzeichnet**, daß das Widerlagerteil (12) eine Oberfläche benachbart zu dem Flachmaterial aufweist, in weicher sich Nuten oder Vertiefungen befinden, die mit den Schneidkanten zusammenwirken.

15. Verfahren nach Anspruch 13 oder Anspruch 14, **dadurch gekennzeichnet**, daß das Teil, von dem ein geschnittenes Blatt aufgenommen wird, das Blatt zu einer Transferstelle bewegt, die beabstandet von der Schneidstelle gelegen ist, und an der das Blatt von der Transfereinrichtung (16, 17) aufgesammelt wird.

16. Verfahren nach einem vorhergehenden Anspruch, **dadurch gekennzeichnet**, daß die Transfereinrichtung (16, 17) mindestens einen Träger (17) mit einer Aufnahmefläche (18) aufweist, auf der die gesammelten Blätter aufgenommen werden, indem sie ausgebreitet an der Aufnahmefläche (18) gehalten werden.

17. Verfahren nach Anspruch 16, **dadurch gekennzeichnet**, daß der Träger (17) von einem Arm (16) gehaltert ist, der den Träger zwischen Positionen bewegt, in denen er die Blätter sammelt und sie der Form zuführt, wobei der Arm (16) bewegbar ist, um die Relativ-Positionen der geschnittenen Blätter einzustellen, wenn die Blätter gesammelt werden, damit die Blätter auf dem Träger an solchen Stellen aufgenommen werden, die zu den Relativ-Positionen der Formhohlräume (4) passen.

18. Verfahren nach Anspruch 16 in Verbindung mit Anspruch 3, **dadurch gekennzeichnet**, daß der Träger (17) von einem Arm (16) gehaltert wird, der den Träger zwischen Positionen bewegt, in der er die Blätter sammelt und sie der Form zuführt, wobei der Träger relativ zu dem Arm bewegbar ist, um die Relativ-Positionen der geschnittenen Blätter beim Sammeln der Blätter so einzustellen, daß die Blätter auf dem Träger an Stellen aufgenommen werden, die zu den Relativ-Positionen der Formhohlräume (4) passen.

19. Verfahren nach Anspruch 16 oder 17 in Verbindung mit Anspruch 5 oder Anspruch 6, **dadurch gekennzeichnet**, daß der Träger (7) relativbewegliche Teile aufweist, die die Positionen der Blätter einstellen.

20. Verfahren nach einem der Ansprüche 9 bis 11, **dadurch gekennzeichnet**, daß die Transfereinrichtung (16, 17) einen Träger (17) mit einer Aufnahmefläche (18) aufweist, auf der ein gesammelter Satz der Blätter aufgenommen wird, wobei die Blätter des Satzes in den gleichen Relativ-Positionen gehalten werden, wie sie in der Gruppe und ausgebreitet auf der Aufnabmefläche (18) aufgenommen wären.

21. Verfahren nach Anspruch 20, **dadurch gekennzeichnet**, daß der Träger (17) von einem Arm (16) gehaltert ist, der den Träger zwischen den Positionen bewegt, in denen er die Blätter sammelt und sie der Form zuführt, wobei die Bewegung des Arms den Träger zum Aufsammeln aufeinanderfolgender Sätze von Blättern aus einer Gruppe einstellt.

22. Verfahren nach Anspruch 20, **dadurch gekennzeichnet**, daß der Träger (17) von einem Arm (16) gehaltert wird, der den Träger zwischen den Positionen bewegt, in denen er die Blätter sammelt und sie der Form zuführt, wobei die Bewegung des Trägers relativ zu dem Arm den Träger zum Aufsammeln aufeinanderfolgender Sätze der Blätter aus einer Gruppe einstellt.

23. Verfahren nach Anspruch 20, **dadurch gekennzeichnet**, daß der Träger (17) Teile aufweist, die zum Sammeln aufeinanderfolgender Sätze der Blätter aus einer Gruppe bewegbar sind.

24. Verfahren nach Anspruch 19, **dadurch gekennzeichnet**, daß die Gruppe geschnittener Blätter (Y, Z, Y1, Z1) nach dem Schneiden und vor dem Sammeln von einer Einrichtung aufgenommen wird, die einstellbar ist, um die Sätze von Blättern in den Gruppen sukzessive in eine Position für jeden Satz zu bewegen, um von der Transfereinrichtung aufgesammelt zu werden.

25. Verfahren nach einem vorhergehenden Anspruch, **dadurch gekennzeichnet**, daß die Form eine Stapelform mit einem Zwischenteil ist, das mit weiteren Formteilen schließt, um Formhohlräume zu definieren, wobei dem Zwischenteil Kunststoff zugeführt wird, der von den Formhohlräumen aufgenommen wird.

26. Verfahren nach einem vorhergehenden Anspruch, **dadurch gekennzeichnet**, daß Dummy-Kerne zur Aufnahme in den Formhohlräumen (4) vorgesehen sind und die Blätter an den Dummy-Kernen zur Aufnahme in den Formhohlräumen angeordnet werden.

27. Verfahren nach einem vorhergehenden Anspruch, **dadurch gekennzeichnet**, daß nach einem Formvorgang jeder der erzeugten Spritzgußartikel (10) nach dem Entfernen aus der Form automatisch von einer Abtasteinrichtung (25, 26) inspiziert wird, weiche an eine Analyseeinrichtung angeschlossen ist, die den inspizierten Artikel zu Kriterien in Beziehung setzt, die für einen geforderten Spritzgußartikel-Standard eingerichtet sind, um die Betätigung einer Zurückweisungseinrichtung zu veranlassen, wodurch der inspizierte Artikel als unzufriedenstellend gekennzeichnet wird, falls er nicht den eingerichteten Kriterien genügt.

28. Verfahren nach Anspruch 27, **dadurch gekennzeichnet**, daß die Zurückweisungseinrichtung den nicht zufriedenstellenden Artikel mit dem betreffenden Formhohlraum, in dem er hergestellt wurde, identifiziert.

29. Verfahren nach Anspruch 27 oder 28, **dadurch gekennzeichnet**, daß die Abtasteinrichtung ein oder mehrere Bildanalysekameras (25, 26) aufweist.

30. Verfahren nach einem der Ansprüche 27 bis 29, **dadurch gekennzeichnet**, daß die Transfereinrichtung (16, 17) die Spritzgußartikel nach jedem Formvorgang aus der Form sammelt und sie der Abtasteinrichtung (25, 26) zu inspizieren anbietet.

31. Vorrichtung zum Herstellen von Spritzgußartikeln gemäß dem Verfahren nach einem der Ansprüche 1 bis 8 oder einem der Ansprüche 12 bis 19 oder 25 bis 30 in Verbindung mit einem der Ansprüche 1 bis 8, umfassend eine Spritzgußform mit Formteilen (2, 3), die relativ-beweglich zwischen einer getrennten und einer geschlossenen Stellung sind, und die mehrere Formhohlräume (4) für darin zu formende Artikel definieren, eine Schneidvorrichtung (10), eine Einrichtung zum Transportieren von Flachmaterial zu der Schneidvorrichtung, **dadurch gekennzeichnet**, daß die Schneidvorrichtung (10) so arbeitet, daß sie mit einem Mal aus dem Flachmaterial eine für die Anzahl von bei einem Formvorgang der Vorrichtung gefertigten Artikel ausreichende Menge Blätter (W, X, Y, Z; Y, Z, Y1, Z1) schneidet, eine Aufnahmeeinrichtung (4) vorgesehen ist, um die geschnittenen Blätter diskret zu halten und sie zu einer Transferstelle zu bewegen, eine Transfereinrichtung (16, 17) dazu ausgebildet ist, die Blätter von der Transferstelle aufzusammeln, sie zu halten und sie zu der Form zu bringen, um sie in den Formhohlräumen (4) zu positionieren, wenn die Formteile getrennt sind, die Aufnahmeeinrichtung (14) und/oder die Transfereinrichtung (16, 17) derart betätigbar ist, damit die Relativ-Positionen der Blätter so eingestellt werden, daß sie den Relativ-Positionen der Formhohlräume entsprechen, und eine Einrichtung betätigbar ist, um die Blätter zu veranlassen, von der Transfereinrichtung loszukommen und jeweils auf einer Fläche eines betreffenden Formhohlraums an einen benachbarten Formteil zu liegen zu kommen oder an einer Fläche, die sich in einem betreffenden Formhohlraum ergibt, wenn die Form geschlossen wird.

32. Vorrichtung zum Herstellen von Spritzgußartikeln nach dem Verfahren gemäß einem der Ansprüche 1, 9, 10, 11 oder 20 bis 24 oder gemäß einem der Ansprüche 12 bis 16 oder 25 bis 30 in Verbindung mit einem der Ansprüche 1, 9, 10, 11 oder 20 bis 24, umfassend: eine Spritzgußform mit Formteilen (2, 3), die relativ-beweglich sind, zwischen einer getrennten und einer geschlossenen Stelle, und die mehrere Formhohlräume (4) für darin zu formende Artikeln definieren, eine Schneidvorrichtung (10), eine Einrichtung zum Transportieren von Flachmaterial zu der Schneidvorrichtung, **dadurch gekennzeichnet**, daß die Schneidvorrichtung (10) so arbeitet, daß sie eine Gruppe von Blättern (Y, Z, Y1, Z1) der erforderlichen Form schneidet, wobei innerhalb der Gruppe die Anzahl von Blättern einem Vielfachen der Anzahl der Formhohlräume (4) der Form entspricht und die Blätter enger beabstandet sind als die Formhohlräume, jedoch so angeordnet sind, daß es innerhalb der Gruppe Sätze von Blättern gibt, in denen jeweils der Zwischenabstand und die Konfiguration der Blätter dem Zwischenabstand und der Konfiguration der Formhohlräume entspricht, einer Aufnahmeeinrichtung (14) vorgesehen ist, um die Gruppe beschnittener Blätter diskret zu halten und die Gruppe zu einer Transferstelle zu bewegen, eine Transfereinrichtung (16, 17) dazu ausgebildet ist, jeden der Sätze von Blättern aus der Transferstelle für aufeinanderfolgende Formvorgänge aufzusammeln, einen gesammelten Satz zu halten und den Satz zu der Form zu bringen, um die Blätter in den Formhohlräumen zu positionieren, wenn die Formteile getrennt sind, und eine Einrichtung betätigbar ist, um den Satz von Blättern zu veranlassen, von der Transfereinrichtung loszukommen, wobei jedes Blatt auf einer Fläche eines zugehörigen Formhohlraums zu liegen kommt, oder auf einer Fläche, die in dem betreffenden Formhohlraum gebildet wird, wenn die Form geschlossen ist.

33. Vorrichtung nach Anspruch 31 oder Anspruch 32, **dadurch gekennzeichnet**, daß an der Transfereinrichtung (16, 17) Dummy-Kerne vorgesehen sind, an denen die Blätter zum Einführen in die Formhohlräume gehalten werden.

34. Vorrichtung nach Anspruch 31 oder Anspruch 32, **dadurch gekennzeichnet**, daß die Aufnahmeeinrichtung ein Teil oder Teile der Schneidvorrichtung ist.

## Revendications

1. Procédé de fabrication d'une pluralité d'articles en plastique moulé ayant chacun un élément découpé (W, X, Y, Z; Y, Z, Y1, Z1) de matériau en feuille appliqué sur une de leurs surfaces pendant que les articles sont moulés dans des cavités (4) du moule définies par des parties (2, 3) du moule mobiles l'une par rapport à l'autre, entre une position séparée et une position fermée, caractérisé en ce qu'il comprend les étapes consistant à amener le matériau (9) en feuille à un moyen (10) de coupe dans lequel une pluralité d'éléments découpés (W, X, Y, Z; Y, Z, Y1, Z1) nécessaires pour une opération de moulage est découpée à la forme désirée dans le matériau en feuille, à recevoir individuellement les éléments découpés, à recueillir les éléments découpés par des moyens (14, 16, 17) de transfert par lesquels lesdits éléments découpés sont transportés dans des positions entre les parties (2, 3) séparées du moule, à faire en sorte que les éléments découpés recueillis soient placés sur les moyens (14, 16, 27) de transfert pour correspondre aux positions relatives des cavités (4) du moule et à amener les éléments découpés des moyens de transfert sur des surfaces des cavités de moule ou des surfaces devant être contenues dans les cavités du moule fermé, dans une partie ou des parties adjacentes du moule, à fermer ensuite les parties du moule et à introduire la matière plastique dans les cavités de moule et contre les éléments découpés, pour produire les articles en plastique moulé.

2. Procédé selon la revendication 1, caractérisé en ce que le moyen de coupe (10) découpe en une opération de coupe un nombre d'éléments découpés (W, X, Y, Z) correspondant aux cavités (4) dans le moule.

3. Procédé selon la revendication 2, caractérisé en ce que les éléments découpés (W, X, Y, Z), tels qu'ils sont découpés dans le matériau en feuille, sont à des positions relatives espacées différemment des positions relatives des cavités de moule.

4. Procédé selon la revendication 3, caractérisé en ce que les éléments découpés (W, X, Y, Z) sont supportés, après avoir été découpés et avant d'être recueillis, par des moyens appropriés pour ajuster les positions relatives des éléments découpés qu'ils portent en accord avec les positions relatives des cavités de moule.

5. Procédé selon la revendication 3, caractérisé en ce que le moyen de transfert a des parties (14, 15, 17) mobiles les unes par rapport aux autres, qui ajustent les positions des éléments découpés (W, X, Y, Z) pendant qu'ils sont recueillis, pour qu'elles correspondent aux positions relatives des cavités de moule.

6. Procédé selon la revendication 3, caractérisé en ce que le moyen de transfert a des parties mobiles les unes par rapport aux autres qui ajustent les positions des éléments découpés (W, X, Y, Z) pendant qu'ils sont transportés vers le moule par le moyen de transfert, pour qu'elles correspondent aux positions relatives des cavités de moule.

7. Procédé selon la revendication 3, caractérisé en ce que les positions des éléments découpés (W, X, Y, Z) sont ajustées partiellement avant que les éléments découpés soient recueillis, et en ce que le positionnement des éléments découpés pour correspondre aux positions relatives des cavités de moule est achevé par le moyen de transfert.

8. Procédé selon une quelconque des revendications 3 à 7, caractérisé en ce que le repositionnement des éléments découpés pour correspondre aux positions relatives des cavités de moule est exécuté automatiquement sous la commande d'un calculateur.

9. Procédé selon la revendication 1, caractérisé en ce que le moyen (10) de coupe découpe un groupe d'éléments découpés (Y, Z, Y1, Z1) dans lequel le nombre d'éléments découpés est un multiple du nombre de cavités de moule (4) et les éléments découpés sont espacés de façon plus rapprochée que les cavités de moule, mais sont disposés de telle sorte que dans le groupe soient formés des ensembles d'éléments découpés, dans chacun desquels l'espacement et la configuration des éléments découpés correspond à l'espacement et à la configuration des cavités de moule, et en ce que les moyens (14, 16, 17) de transfert recueillent un des ensembles d'éléments découpés du groupe pour une opération de moulage et reviennent pour recueillir l'ensemble ou chacun des ensembles d'éléments découpés du groupe pour l'opération ou chaque opération suivante de moulage.

10. Procédé selon la revendication 9, caractérisé en ce que le groupe d'éléments découpés (Y, Z, Y1, Z1) est découpé en une opération du moyen de coupe (10).

11. Procédé selon la revendication 9 ou la revendication 10, caractérisé en ce qu'il y a quatre cavités (4) de moule a qu'il y a 16 éléments découpés (Y, Z, Y1, Z1) dans le groupe découpé par le moyen de coupe (10), disposés de telle sorte qu'il y a quatre ensembles d'éléments découpés à amener successivement dans le moule pour quatre opérations de moulage successives.

12. Procédé selon une quelconque des revendications précédentes, caractérisé en ce que le matériau en feuille dans lequel les éléments découpés sont découpés est un matériau de film de plastique pelure ayant une épaisseur de 0,030 mm ou moins.

13. Procédé selon une quelconque des revendications précédentes, caractérisé en ce que le moyen (10) de coupe comprend au moins un élément (12) formant semelle de taille plus grande que l'élément ou les éléments à découper en une fois dans le matériau en feuille, et un élément (A, B, C, D; A, B, A1, B1) formant matrice pour chaque élément découpé (W, X, Y, Z; Y, Z, Y1, Z1), qui comporte une arête de coupe définissant la forme voulue de l'élément découpé, les éléments formant semelle et matrice pouvant se déplacer l'un par rapport à l'autre pour appuyer sur des faces opposés du matériau (9) en feuille afin de découper les éléments dans le matériau, et chaque élément découpé étant reçu par un des éléments servant au recueil par les moyens de transfert.

14. Procédé selon la revendication 13, caractérisé en ce que l'élément (12) formant semelle a une surface adjacente au matériau en feuille dans laquelle se trouvent des rainures ou évidements avec lesquels coopèrent les arêtes de coupe.

15. Procédé selon la revendication 13 ou la revendication 14, caractérisé en ce que l'élément par lequel un élément découpé est reçu amène l'élément dé coupé à une position de transfert éloignée du point où a lieu la coupe, position de transfert où l'élément découpé est recueilli par les moyens de transfert (16, 17).

16. Procédé selon une quelconque des revendications précédentes, caractérisé en ce que le moyen de transfert (16, 17) comprend au moins un support (17) avec une surface porteuse (18) sur laquelle sont reçus les éléments découpés recueillis en étant maintenus étendus contre la surface porteuse (18).

17. Procédé selon la revendication 16, caractérisé en ce que le support (17) est porté par un bras (16) qui déplace le support entre des postions dans lesquelles ii recueille les éléments découpés et les délivre au moule, et en ce que le bras (16) est mobile pour ajuster les positions relatives des éléments découpés, alors que les éléments découpés sont recueillis, de telle sorte que les éléments découpés soient portés sur le support dans des positions qui correspondent aux positions relatives des cavités de moule (4).

18. Procédé selon la revendication 16 quand elle dépend de la revendication 3, caractérisé en ce que le support (17) est porté par un bras (16) qui déplace le support entre des positions dans lesquelles il recueille les éléments découpés et les délivre au moule, et en ce que le support est mobile par rapport au bras pour ajuster les positions relatives des éléments découpés pendant que les éléments découpés sont recueillis, de telle sorte que les éléments découpés soient portés sur le support dans des positions qui correspondent aux positions relatives des cavités de moule (4).

19. Procédé selon la revendication 16 ou la revendication 17 quand elles dépendent de la revendication 5 ou de la revendication 6, caractérisé en ce que le support (17) comporte les parties mobiles les unes par rapport aux autres qui ajustent les positions des éléments découpés.

20. Procédé selon une quelconque des revendications 9 à 11, caractérisé en ce que les moyens (16, 17) de transfert comprennent un support (17) avec une surface porteuse (18) sat laquelle est porté un ensemble recueilli des éléments découpés, les éléments découpés de l'ensemble étant maintenus dans les mêmes positions relatives que celles dans lesquelles ils étaient portés dans le groupe et étendus contre la surface porteuse (18).

21. Procédé selon la revendication 20, caractérisé en ce que le support (17) est porté par un bras (16) qui déplace ledit support entre les positions dans lesquelles il recueille les éléments découpés et les délivre au moule, et en ce que le mouvement du bras ajuste le support pour recueillir les ensembles successifs d'éléments découpés d'un groupe.

22. Procédé selon la revendication 20, caractérisé en ce que le support (17) est porté par un bras (16) qui déplace le support entre les positions dans lesquelles ii recueille les éléments découpés et les délivre au moule, et en ce que le mouvement du support par rapport au bras ajuste le support pour recueillir les ensembles successifs d'éléments découpés dans un groupe.

23. Procédé selon la revendication 20, caractérisé en ce que le support (17) a des parties qui sont mobiles pour recueillir les ensembles successifs d'éléments découpés dans an groupe.

24. Procédé selon la revendication 9, caractérisé en ce que le groupe d'éléments découpés (Y, Z, Y1, Z1) est porté, après la coupe et avant le recueil, par un moyen ajustable pour déplacer les ensembles d'éléments découpés des groupes successivement dans une position telle que chaque ensemble à son tour soit recueilli par les moyens de transfert.

25. Procédé selon une quelconque des revendications précédentes, caractérisé en ce que le moule est un moule en pile qui a une partie intermédiaire avec laquelle les autres parties du moule se ferment pour définir les cavités du moule, la matière plastique étant introduite dans la partic intermédiaire pour être reçue dans les cavités du moule.

26. Procédé selon une quelconque des revendications précédentes, caractérisé en ce que des faux noyaux sont prévus pour être reçus dans les cavités (4) de moule et en ce que les éléments découpés sont placés sur les faux noyaux pour être reçus dans les cavités de moule.

27. Procédé selon une quelconque des revendications précédentes, caractérisé en cc qu'après une opération de moulage chacun des articles (10) moulés produits est soumis automatiquement, après extraction du moule, a un contrôle par des moyens formant scanneur (25, 26) reliés à un moyen d'analyse qui compare l'article contrôlé à des critères établis pour une norme souhaitée d'article moulé, et déclenche l'entrée en action d'un moyen de rejet, par lequel l'article contrôlé est identifié comme étant défectueux lorsqu'il ne satisfait pas aux critères établis.

28. Procédé selon la revendication 27, caractérisé en ce que le moyen de rejet identifie l'article défectueux avec la cavité de moule respective dans laquelle il a été produit.

29. Procédé selon la revendication 27 ou 28, caractérisé en ce que le moyen formant scanneur comprend une ou plusieurs caméras (25, 26) d'analyse d'image.

30. Procédé selon une quelconque des revendications 27 à 29, caractérisé en ce que les moyens de transfert (16, 17) recueillent les articles moulés à partir du moule après chaque opération de moulage et les présentent pour inspection aux moyens formant scanneur (25, 26).

31. Appareil destiné à la fabrication d'articles en plastique moulé en conformité avec le procédé tel que revendiqué dans une quelconque des revendications 1 à 8, ou dans une quelconque des revendications 12 à 19 ou 25 à 30 dans la mesure où elles dépendent d'une quelconque des revendications 1 à 8, comprenant un moule à injection ayant des parties (2, 3) de moule qui sont mobiles les unes par rapport aux autres entre une position séparée et une position fermée et définissent une pluralité de cavités (4) de moule pour des articles à mouler, un moyen (10) de coupe, un moyen destiné à amener le matériau en feuille au moyen de coupe, caractérisé en ce que le moyen (10) de coupe découpe en une fois, dans le matériau en feuille, suffisamment d'éléments découpés (W, X, Y, Z; Y, Z, Y1, Z1) pour le nombre d'articles à produire en une opération de moulage de l'appareil, un moyen (14) formant support est prévu pour supporter individuellement les éléments découpés et les déplacer vers une position de transfert, des moyens de transfert (16, 17) sont adaptés pour recueillir les éléments découpés à partir de la position de transfert, les supporter et les amener au moule pour les placer dans les cavités (4) de moule quand les parties de moule sont séparées, le moyen (14) formant support et/ou les moyens de transfert (16, 17) servant à ajuster les positions relatives des éléments découpés pour qu'elles correspondent aux positions relatives des cavités de moule, et un moyen sert à décharger les éléments découpés des moyens de transfert et à les placer sur une surface d'une cavité de moule concernée d'une partie de moule adjacente, ou sur une surface à présenter dans une cavité concernée des cavités de moule, quand le moule est fermé.

32. Appareil destiné à la fabrication d'articles en plastique moulé en conformité avec le procédé tel qu'il est revendiqué dans une quelconque des revendications 1, 9, 10, 11 ou 20 à 24, ou dans une quelconque des revendications 12 à 16 ou 25 à 30 alors qu'elles dépendent d'une quelconque des revendications 1, 9, 10, 11 ou 20 à 24, comprenant un moule à injection ayant des parties (2, 3) de moule qui sont mobiles les unes par rapport aux autres entre une position séparée et une position fermée et définissent une pluralité de cavités de moule (4) pour des articles qui doivent y être moulés, un moyen de coupe (10), un moyen destiné à amener un matériau en feuille au moyen de coupe, caractérisé en ce que le moyen de coupe (10) fonctionne pour découper un groupe d'éléments découpés (Y, Z, Y1, Z1) de la forme souhaitée, groupe dans lequel le nombre d'éléments découpés est un multiple du nombre de cavités (4) du moule et les éléments découpés sont espacés de façon plus rapprochée que les cavités de moule, mais sont disposés de telle sorte que dans le groupe, soient formés des ensembles d'éléments découpés, dans chacun desquels l'espacement et la configuration des éléments découpés correspondent à l'espacement et à la configuration des cavités de moule, un moyen (14) formant support est prévu pour prendre le groupe d'éléments découpés de façon séparée et déplacer le groupe vers une position de transfert, des moyens de transfert (16, 17) sont prévus pour recueillir chaque ensemble d'éléments découpés de la position de transfert pour des opérations de moulage successives, supporter un ensemble recueilli et amener l'ensemble au moule pour placer les éléments découpés dans les cavités de moule quand les parties de moule sont séparées, et un moyen libère l'ensemble d'éléments découpés des moyens de transfert et place chaque élément découpé sur une surface d'une cavité concernée des cavités de moule, ou sur une surface à présenter dans une cavité concernée des cavités de moule, quand le moule est fermé.

33. Appareil selon la revendication 31 ou la revendication 32, caractérisé en ce que sont prévus sur les moyens (16, 17) de transfert des faux noyaux sur lesquels les éléments découpés sont maintenus pour l'introduction dans les cavités de moule.

34. Appareil selon la revendication 31 ou la revendication 32, caractérisé en ce que le moyen de support est une partie ou des parties du moyen de coupe.
